(19) Europäisches Patentamt
European Patent Office
Office européen des brevets

(11) **EP 1 875 591 B1**

(12) **EUROPEAN PATENT SPECIFICATION**

(45) Date of publication and mention
of the grant of the patent:
**10.10.2012  Bulletin 2012/41**

(51) Int Cl.:
***H02M 3/156*** (2006.01)      ***G05F 1/565*** (2006.01)

(21) Application number: **05743377.3**

(22) Date of filing: **12.04.2005**

(86) International application number:
**PCT/IT2005/000205**

(87) International publication number:
**WO 2006/109329 (19.10.2006 Gazette 2006/42)**

(54) **MULTI-PHASE VOLTAGE REGULATOR**

MEHRPHASEN-SPANNUNGSREGLER

REGULATEUR DE TENSION MULTIPHASE

(84) Designated Contracting States:
**DE FR GB IT**

(43) Date of publication of application:
**09.01.2008  Bulletin 2008/02**

(73) Proprietor: **STMicroelectronics Srl
20864 Agrate Brianza (IT)**

(72) Inventors:
• **ZAMBETTI, Osvaldo, Enrico
I-20100 Milano (IT)**

• **ZAFARANA, Alessandro
I-20151 Milano (IT)**

(74) Representative: **Zambardino, Umberto
Botti & Ferrari S.r.l.
Via Cappellini, 11
20124 Milano (IT)**

(56) References cited:
**US-A1- 2003 102 849      US-A1- 2003 107 358
US-A1- 2004 178 779      US-A1- 2005 017 703**

**Description**

<u>Field of application</u>

The present invention relates to a multiphase voltage regulator.

More particularly, the present invention relates to a multiphase voltage regulator comprising N converters located in parallel to each other suitable to provide a desired output voltage proportionally to a required current.

The multiphase voltage regulator is an electronic device being used in several applications, for example as a power supply in the microprocessors used in personal computers, workstations, servers, printers and other similar electronic equipment.

<u>Prior art</u>

As it is well known to the skilled in the art, electronic device microprocessors are at present considerably developping to meet the requirements sought by CPUs.

In fact, it is known that present CPUs require a high supply voltage precision, which can be approximately estimated in a voltage variation request of $\Delta V = (+/- 0.8\%)$ in the steady state conditions and of $\Delta V = (+/-3\%)$ in the transient conditions. Unfortunately, supply voltages can usually decrease to values of 1.1.V while load currents can rise up to 100 A, with possible slopes of 100 A/$\mu$s, and however a higher efficiency than 80% is required.

The research has identified the voltage regulator topology as the cheapest and most effective solution to meet the present requirements.

The voltage regulator is realised in several configurations and it allows a desired output voltage to be provided proportionally to the current required by the microprocessor. This feature is called in literature droop function or voltage positioning.

The droop function feature obliges a device comprising a Current Sense circuit to be provided, allowing the current outputted by the device to be read or estimated.

In general, the Current Sense circuit reads the current as a voltage drop across a resistance, this resistance can be either a voltage regulator parasitic element, for example in power switches the resistance Rds,on or the parasitic resistance of the inductance DCR, or it can be an element being conveniently inserted in the circuit, for example a resistance Rsense.

If a resistance Rsense is used, a very precise current reading is advantageously provided and moreover, since constantan-made resistances are generally used, the reading is almost independent from temperature variations.

Nevertheless, this solution has, for the known advantages, the drawback of a higher cost and of a reduced current conversion efficiency.

If a regulator parasitic element is instead used, the solution is more economical since it exploits elements being already in the regulator, but it provides a less precise reading being sensitive to the single element errors and to the variations produced therefrom according to the temperature undergone by the regulator.

In particular, a current reading on the inductance parasitic resistance (DCR) has some advantages in terms of precision, the tolerance in that case is 5%, with respect to the reading on the resistance Rds,on of the low-side switch having a tolerance of about 30%.

Several voltage regulators with reading systems comprising the droop function implemented to obtain the current measure of the voltage regulator module (VRM) inductors are on sale.

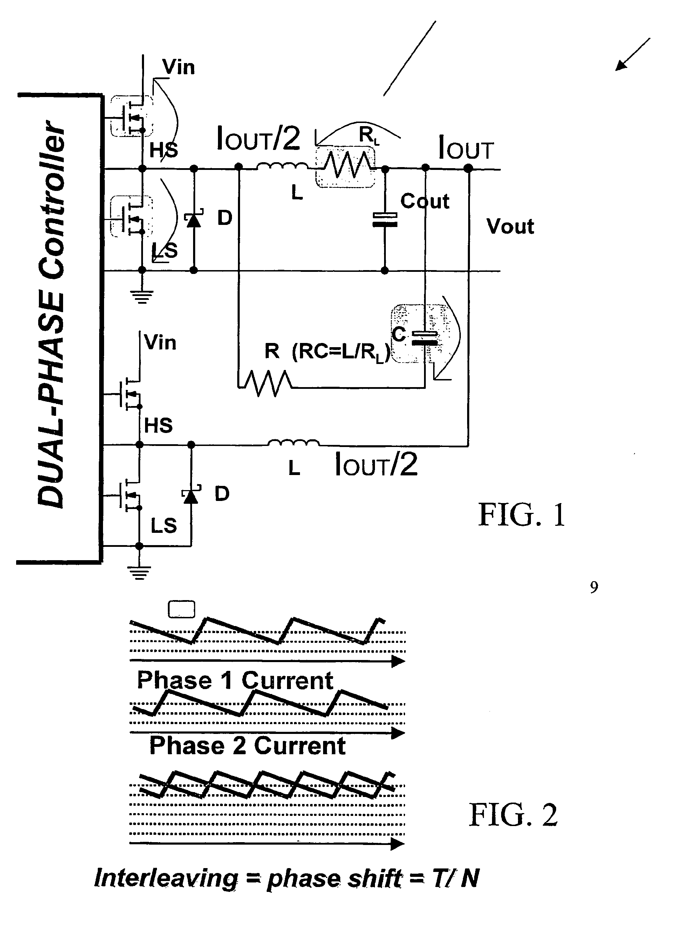

An example of voltage regulator, also called multiphase DC-DC converter, in a standard dual-phase configuration, is represented in figure 1. The voltage regulator has, for each module or phase, a dc-dc switch comprising a pair of field-effect transistors, HS and LS, interposed in series between an input voltage Vin and a ground voltage, and an inductance L interposed between an intermediate node of the two transistors HS and LS and the output.

The output current of each module is added to the current coming from the other modules and it defines the output current of the voltage regulator $I_{OUT}$.

The voltage regulator has, for each module, a Current Sense circuit comprising a parasitic resistance $R_L$ of the inductance L, and a filtering network comprising a capacitor C and a resistance R, bringing the output signal at the input of the inductance L. In particular, the value of the resistance R is defined so that for each circuit the relation $R*C=L/R_L$ applies.

Therefore, the output current of the first switching element has a sawtoothed configuration as indicated in the graph of figure 2, Phase 1 current.

Also the output current $I_{OUT}$ of the voltage regulator, being the sum of the two current signals, has a sawtoothed configuration and a period corresponding to T/2.

In general, a multiphase voltage regulator with N switches has an output current with a sawtoothed configuration with a period corresponding to T/N.

Nevertheless, the so-realised voltage regulators require a control circuit of the phase displacements between the input currents of the N switches, allowing a feedback operation on the switches.

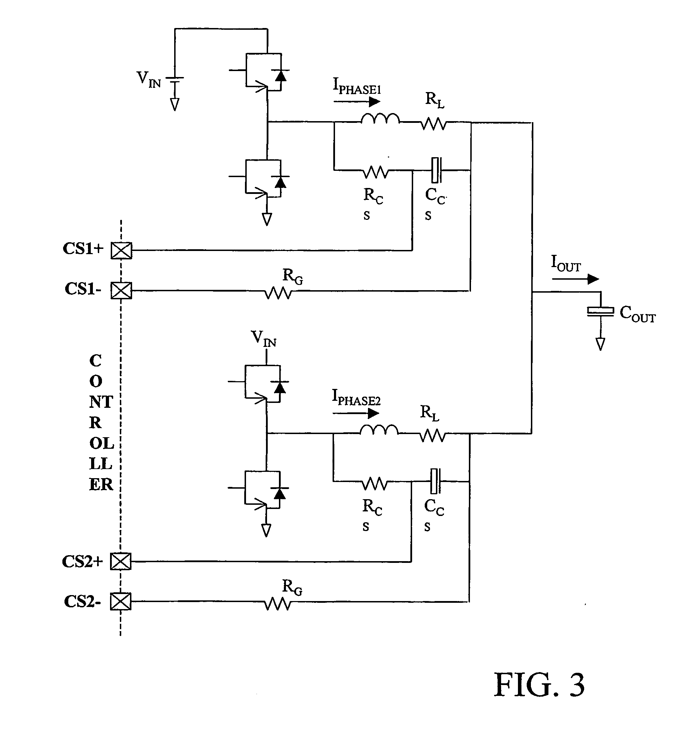

A known device is described in the US patent no. 5,982,160 in the name of Walters et al. wherein a R-C current sense network is connected in parallel to each output inductor of the voltage regulator, as emphasized in figure 3, provided that the current sense circuit, i.e. the R and C values are determined by the time constant matching, i.e. by the equality between the time constant of the circuit $R_L$-L or coil network and of the current sense R-C circuit.

Moreover, the current sense circuit current signal of each R-C network is analysed together with the output signal, through a resistance Rg, by a controller, not emphasised in the figure.

In the case represented in figure 3, a circuit is shown for estimating the output current of the dual-phase voltage regulator emphasizing that the controller for each R-C network analyses two pins. Therefore, by generalizing, for N phases or modules the controller analyses 2N pins.

However, the voltage regulator according to the provided solution, although advantageous under several aspects, has some drawbacks, in fact the controller produces a current or voltage signal which will be proportional to the resistance $R_L$, $R_G$, and to the output current $I_{OUT}$ therefore the good quality of the produced signal will depend on the good quality of the inserted components and on the variations thereof according to the temperature. It must also be noted that this regulator requires N R-C networks, one for each phase, that the capacitor Ccs is generally of the COG type, particularly expensive, and that the controller requires 2*N pins to read the total current.

This involves a regulator circuit complexity and the need for a considerable surface for the in-silicon-chip integration, moreover, the N R-C networks being required can insert some delays in output signals which could invalidate the voltage regulator reliability.

A further known multiphase voltage regulator is described in the US patent no. 6,683,441 B2 by Schiff et al. and shown in figure 4 in a dual-phase example.

In this solution, the voltages of the two nodes, PHASE1 and PHASE2, are added, preferably by means of a resistance Rp, and sent to an operational amplifier, which further receives the regulator output voltage.

The operational amplifier has, feedback, a R-C network, or circuit sense, comprising a resistance Rcs and a capacitor Ccs located in parallel and defined so that Rcs is determined by the time constant matching between the time constant $R_L$-L e Rcs-Ccs, to output a voltage VCS proportional to the regulator output current $I_{OUT}$, according to the relation:

$$V_{CS} = V_{OUT} - \frac{R_L \cdot R_{CS}}{R_P} \cdot I_{OUT}$$

A controller then analyses the two input signals and the output signal of the operational amplifier, thus requiring three pins.

In order to obtain a signal being directly proportional to the regulator output voltage Vout, it is however necessary to use, after the operational amplifier, a further amplifier removing the constant term Vout, according to the relation:

$$V_{DROOP} = V_{OUT} - V_{CS} = \frac{R_L \cdot R_{CS}}{R_P} \cdot I_{OUT}$$

Therefore, the present solution, though responding to the aim and being advantageous under several aspects, has some drawbacks, requiring the use of N external resistances Rp for the adder node, a sense circuit comprising the R-C network for the time costant matching, and an amplifier, while the controller requires well three pins for the reading, moreover, in order to proportionally determine the regulator output voltage, a further second amplifier must be available.

It must also be noted that in voltage regulators presently on sale the presence of more and more precise components, to meet the need for more and more stringent specifications, poses further problems. In particular, the use of smaller and smaller inductors with lower and lower parasitic resistances $R_L$ clashes with the presence of the parasitic resistances on the application boards because of the inevitable unvoid resistances due to copper tracks.

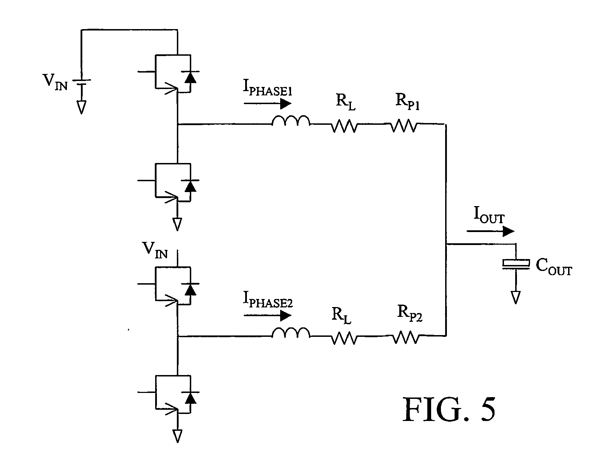

As emphasised in figure 5, for a dual-phase regulator, the presence of the parasitic resistances $R_{p1}$ in serie with the resistances $R_L$ requires a reading circuit which can read the information directly across the coil network, i.e. the inductance L in series with the resistance $R_L$, avoiding the parasitic resistances $R_{Pi}$ of the board tracks. This reading typology is called Fully differential.

The current reading described in the US patent no. US 5,982,160 by Walter et al., shown in figure 3, is a Fully Differential reading, nevertheless this solution requires, as already emphasized, N R-C networks, where N is the number of phases and 2*N the pins for the total current reading.

While in the case indicated in the US patent no. US 6,683,441 and shown in figure 4 it is impossible to provide a fully differential current reading since the solution takes as a reference the output voltage $V_{OUT}$, summing both phases. Therefore, if there were different parasitic resistances for the two phases, an error would be committed in the current measure.

The US application patent no. US 2003/0102849 discloses a multiphase switching regulator that includes N current sensing elements which carry respective phase currents. The voltage based on total inductor output current and the sum of the voltages of the sensing elements are applied to the circuit amplifier, the output of which is used as an input to a controller to provide current-mode control of the regulator.

The technical problem underlying the present invention is to provide a voltage regulator, comprising a simple and reliable Current Sense circuit, and having such structural and functional features as to make the regulator particularly compact allowing the use of external components to be minimised and both the area occupied on the silicon chip, wherein it is integrated, and the area occupied on the board to be reduced, also reducing the number of pins required by the controller to read the output signal, thus overcoming the drawbacks still affecting prior art voltage regulators.

A further aim of the present invention is to realise a current sense circuit of a fully differential voltage regulator on the coil circuit obtaining a reading being independent from the resistances due to the copper tracks on the application board, overcoming the drawbacks still affecting prior art solutions.

Summary of the invention

The solution idea underlying the present invention is to generate a current signal being directly proportional to the total current provided by the voltage regulator independently from the number of phases and from the value of the parasitic resistances created by the tracks on the board, using only two PINs for the reading thereof.

Based on this solution idea, the technical problem is solved by a multiphase voltage regulator as previously indicated and defined in the characterising part of claim 1.

The features and advantages of the multiphase voltage regulator according to the invention will be apparent from the following description of an embodiment thereof given by way of non limiting example with reference to the attached drawings.

Brief description of the drawings

In the drawings:

- Figures 1 and 2 show a standard dual-phase voltage regulator and an output current diagram respectively;

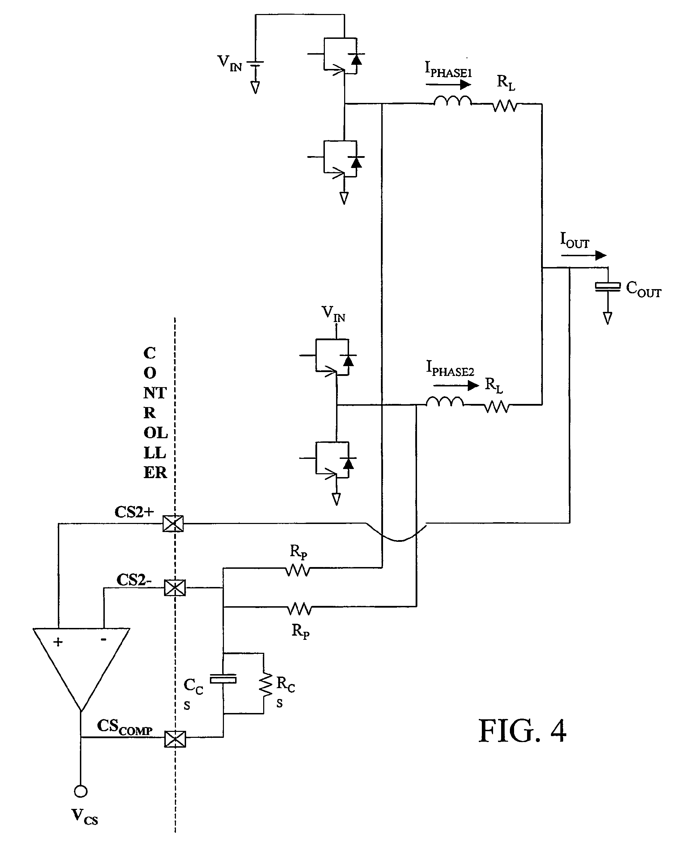

- Figures 3 and 4 show two voltage regulators realised according to the prior art;

- Figure 5 shows a dual-phase voltage regulator when parasitic resistances due to the tracks on the board are present;

- Figure 6 shows a N-phase voltage regulator realised according to the present invention;

- Figure 7 shows a dual-phase voltage regulator according to the present invention;

- Figures 8 and 9 shows some details of the voltage regulator of figure 6;

- Figures 10 and 11 show similar details to figures 8 and 9 of a further embodiment of a voltage regulator according to the present invention;

- Figure 12 shows a N-phase voltage regulator wherein the solution shown in figure 10 is applied;

- Figures 13 and 14 show similar details to figures 8 and 9 of a further embodiment of a voltage regulator according to the present invention;

- Figure 15 shows a N-phase voltage regulator wherein the solution shown in figure 13 is applied.

Detailed description

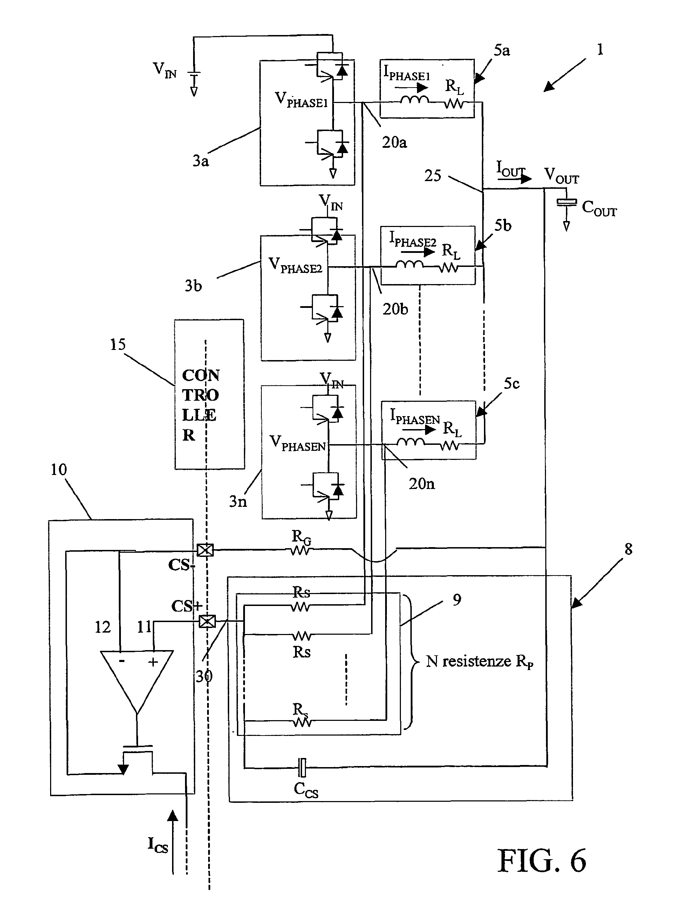

With reference to the figures, and particularly to figure 6, a voltage regulator 1 according the present invention is shown, generating an output voltage $V_{OUT}$ for a general load, indicated with $C_{OUT}$.

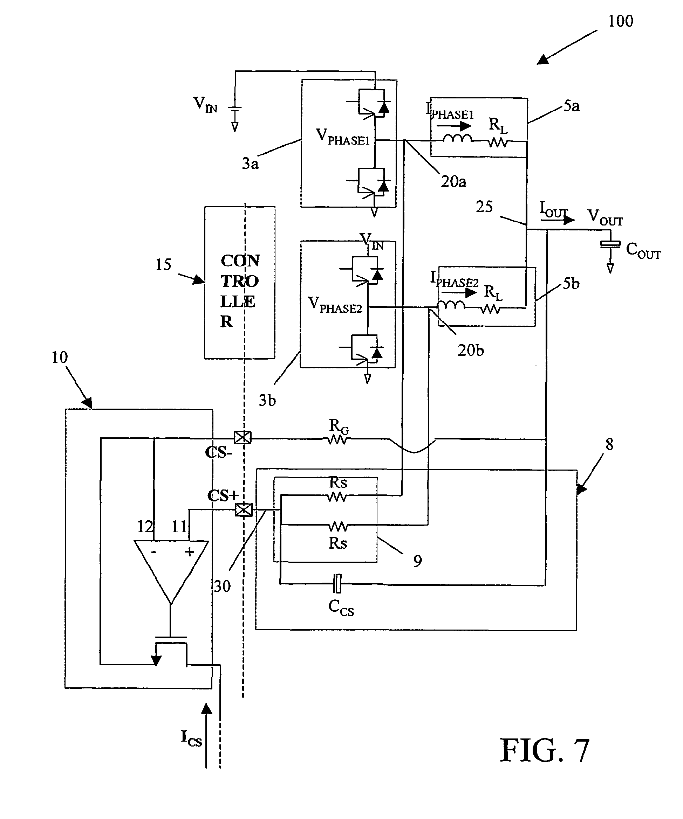

For convenience of illustration, a dual-phase voltage regulator 100 is described, represented in figure 7, and comprising a first switch 3a and a second switch 3b located in parallel to each other, each being interposed between an input current $V_{IN}$ and a ground current.

Moreover, for more clarity, it is first considered that the parasitic resistances due to the board copper tracks are negligible, referring hereafter to a more detailed description.

The first and second switch 3a 3b have a voltage $V_{PHASE1}$, $V_{PHASE2}$ at the respective output node 20a 20b and respective current phases $I_{PHASE1}$, $I_{PHASE2}$ which, through respective inductive circuits 5a 5b are added in correspondence with an output terminal 25 to generate the total current $I_{OUT}$ to be provided to a general load $C_{OUT}$.

Each inductive circuit 5a 5b comprises, according to the present embodiment, an inductance L and a resistance $R_L$. This inductive circuit could obviously have a different configuration.

Advantageously, according to the present embodiment, the voltage regulator 100 has a sense circuit 8, or filtering circuit, comprising an adder circuit 9 adding the voltages $V_{PHASE1}$, $V_{PHASE2}$, of each of the output nodes 20a and 20b of the first and second switch 3a and 3b, bringing the added voltage to an adder node 30.

According to a preferred embodiment, the adder circuit 9 has, for each switch 3a and 3b, a resistance Rs interposed between each output 20a and 20b and the adder node 30.

Conveniently, the sense circuit 8 comprises a capacitor Ccs interposed between the adder node 30 and the voltage regulator output terminal 25 defining for the sense circuit 8 a filtering circuit feature.

Conveniently, the value of the resistances Rs and of the capacitor $C_{CS}$ are so calculated as to equal the term due to the time constant of the inductive circuit 5a,5b, in this case, of the circuit $R_L$-L, i.e. $(L/R_L) = (Rs/2)$ *Ccs.

Advantageously, the voltage regulator 100 comprises an amplifier 10, which is in this specific case an operational amplifier, being connected with a first input 11 to the adder node 30 and with a second input 12 to the output terminal 25 by means of a suitable resistance $R_G$.

Conveniently, the operational amplifier 10 is in a converter configuration V/I with at the first non inverting input 11 the adder node 30 and at the second inverting input 12 or virtual ground the resistance $R_G$, having however at the other end the output voltage $V_{OUT}$. The operational amplifier 10 thus outputs a current signal Ics which is directly proportional to the sum of the current phases $I_{PHASE1}$, $I_{PHASE2}$ of the switches 3a and 3b and thus to the total current $I_{OUT}$ outputted by the voltage regulator 100.

Moreover, advantageously the first input 11 and the second input 12 of the operational amplifier 10 are the only two pins CS+ e CS- used by a controller 15 to read the current $I_{OUT}$.

The controller 15 is schematically represented in the figure and it operates on the input voltage $V_{IN}$ of the first and second switch 3a and 3b to keep the sum of the current phases $I_{PHASE1}$, $Ip_{HASE2}$ and thus the total current $I_{OUT}$ constant.

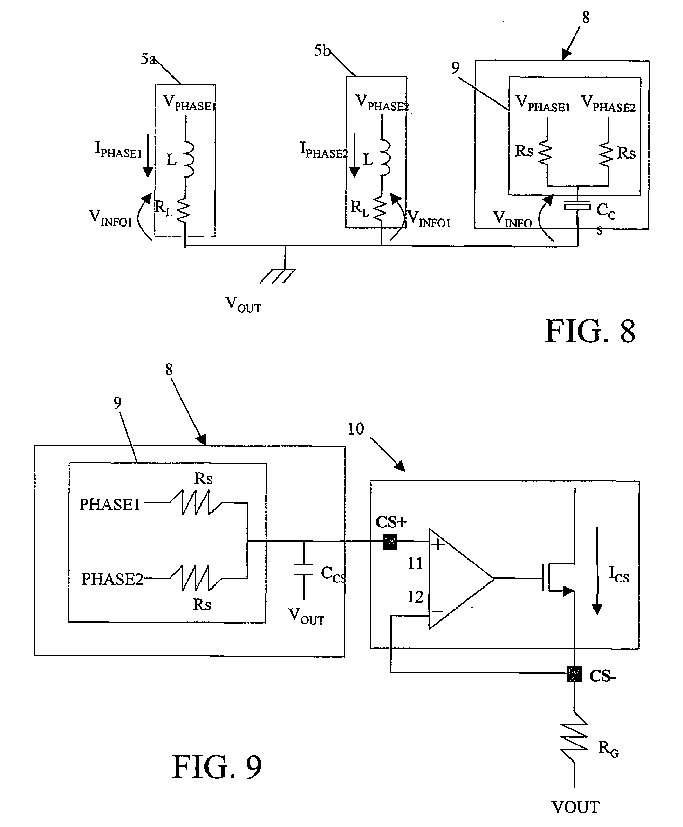

The operation of the voltage regulator 100 will now be analysed, but the filtering, occurring in correspondence with the sense circuit 8, is examined first, with reference to figures 8 and 9.

From the signal point of view, the output terminal 25 can be deemed at a ground voltage and thus also $V_{OUT}$ at a ground voltage as particularly emphasized in figure 8.

The voltages $V_{INFO1}$ and $V_{INFO2}$ being created in correspondence with each resistance $R_L$ of the inductive circuit 5a and 5b are easily calculated, resulting:

$$V_{INFO1}(s) = V_{PHASE1}(s) \cdot \frac{1}{1 + \dfrac{L}{R_L}}$$

$$V_{INFO2}(s) = V_{PHASE2}(s) \cdot \frac{1}{1 + s \cdot \dfrac{L}{R_L}}$$

$$V_{INFO}(s) = \frac{V_{PHASE1}(s) + V_{PHASE2}(s)}{2} \cdot \frac{1}{1 + s \cdot \frac{R_P}{2} \cdot C_{CS}}$$

The important information signal is:

$$V_{INFO}\big|_{IDEALE}(s) = V_{INFO1}(s) + V_{INFO2}(s) = \left[V_{PHASE1}(s) + V_{PHASE2}(s)\right] \cdot \frac{1}{1 + L/R_L}$$

Obviously, by selecting the values of the resistance Rs and of the capacitor Ccs so as to equal the term due to the time constant $R_L$-L of the inductive circuit 5a, 5b, the sizing relation (1) and the relation (2) concering the voltage across the capacitor Ccs are obtained

$$\frac{L}{R_L} = \frac{R_s}{2} \cdot C_{CS} \qquad time\ cons\tan t\ matching\ldots relation \qquad (1)$$

$$V_{INFO}(s) = \frac{V_{INFO}\big|_{IDEALE}(s)}{2} \qquad read\inf ormation\ldots signal$$

$$V_{INFO} = \frac{R_L \cdot \left(I_{PHASE1} + I_{PHASE2}\right)}{2} \qquad (2)$$

Figure 9 will now be analysed, considering the operative case wherein the output voltage $V_{OUT}$ is different from the ground voltage.

At the first positive input 11 of the operational amplifier 10 which is also the first pin CS+ of a controller 8, not shown in the figure, an average voltage occurs, corresponding to:

$$V_{CS+} = V_{INFO} + V_{OUT} = \frac{R_L \cdot \left(I_{PHASE1} + I_{PHASE2}\right)}{2} + V_{OUT}$$

The presence of the operational amplifier 10 in a voltage-current converter configuration V/I and the presence of the resistance $R_G$ interposed between a second pin CS- of the controller 15, which is also the second input 12 or virtual ground of the amplifier 10, and the output voltage Vout, generates an output current signal Ics corresponding to:

$$I_{INFO} = \frac{R_L}{2 \cdot R_G} \cdot \left(I_{PHASE1} + I_{PHASE2}\right) \qquad (3)$$

which is a signal being directly proportional to the current phases $I_{PHASE1}$ and $I_{PHASE2}$ i.e. to the total current $I_{OUT}$.

The main advantage of the present invention is thus to obtain a current signal being directly proportional to the sum of the phase currents and thus to the total current outputted by the voltage regulator requiring a minimum amount of external elements, such as an operational amplifier 10, N+1 resistances and an external capacitor $C_{cs}$, moreover only two PINs CS+ e CS- are required to the controller 15.

Obviously, what has been described for a dual-phase regulator 100 can be generalised for the sizing of a sense circuit 8 for a voltage regulator with N switches 3, as shown in figure 5.

The generalisation is very simple, in fact the circuit configuration remains substantially the same as the previous description and, for simplicity, a similar numbering to what has been previously indicated for the components having the same structure and functionality is kept.

In particular, each switch 3n added in parallel to the first and second switch 3a and 3b has similar connections, i.e. it provides a current phase $I_{PHASEN}$ which, through a respective inductive circuit 5n is added to the phase currents $I_{PHASE1}$, $I_{PHASE2}$ in correspondence with the output terminal 25, to generate a total current $I_{OUT}$.

The sense circuit 8 comprises an adder circuit 9 adding to the voltages $V_{PHASE1}$, $V_{PHASE2}$ of each of the output nodes 20a and 20b of the first and second switch 3a and 3b, the voltage $V_{PHASEN}$ at an output node 20n of the added switch 3n. The adder circuit 9 has the voltage being added at an adder node 30.

According to the present embodiment, the adder circuit 9 has for each added switch 3n a further resistance Rs interposed between each output 20n and the adder node 30.

Concerning the remaining circuitry, the configuration is similar to what has been previously described.

In particular, therefore, the generalised formula (1) defines the formula (4) where N is the number of switches 3n of the voltage regulator 1:

$$\frac{L}{R_L} = \frac{R_S}{N} \cdot C_{CS} \qquad time\ cons\tan t\ matching\ relation \quad (4)$$

$$I_{INFO} = \frac{R_L}{R_G} \cdot \frac{1}{N} \cdot \sum_{i=1}^{N} I_{PHASE,i} \qquad \inf ormation\ signal \quad (5)$$

Similarly, the formula (3) can be generalised defining the formula (5).

It can be observed how the present solution allows a voltage regulator to be realised wherefrom the total outputted current can be read by using two pins independently from the number of the existing current phases.

Obviously, a programmability of the signal Ics, being useful in the case of the voltage regulator droop function programmability, i.e. the feature to provide a desired output voltage proportionally to the current required by the load, is entrusted to the sizing of the resistance $R_G$.

Advantageously, the present invention provides that, as above described, the voltage converter current reading is made completely fully differential on the inductance L, i.e. independent from the parasitic resistances due to the board copper tracks.

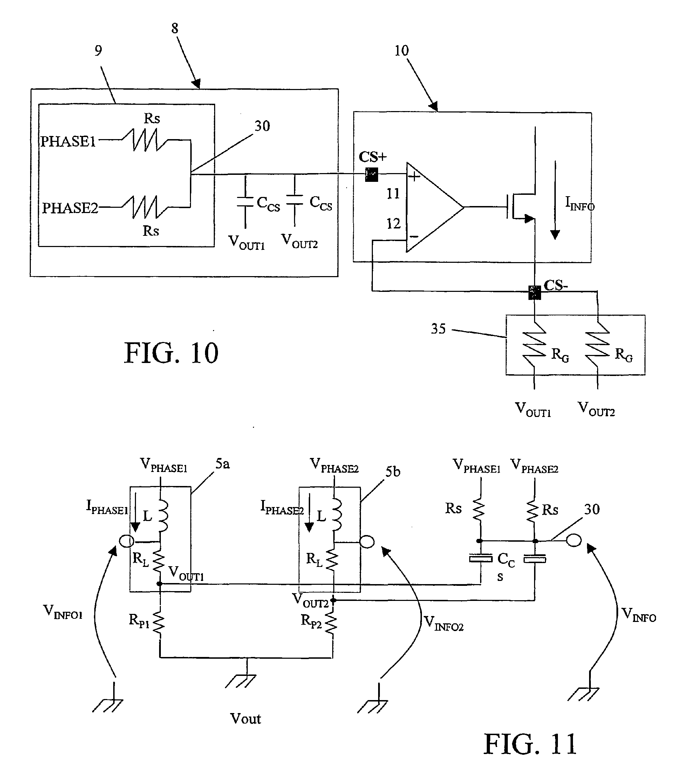

In particular, a provided solution is shown in figure 10 for a dual-phase converter.

The circuit configuration remains substantially the same as the previous description and, for simplicity, a similar numbering to what has been previously indicated for the components having the same structure and functionality is kept.

Advantageously, figure 10 according to the present embodiment has a sense circuit 8 or filtering circuit comprising an adder circuit 9 which adds the voltages, $V_{PHASE1}$, $V_{PHASE2}$, outputted by each of the two phases of a voltage regulator, not shown in the figure.

Conveniently, the adder circuit 9 outputs at an adder node 30 the voltages added $V_{PHASE1}$, $V_{PHASE2}$, by interposing a resistance Rs, one for each phase.

Advantageously, the sense circuit 8 comprises two capacitors Ccs, one for each phase, interposed between the adder node 30 and the output $V_{OUT1}$ and $V_{OUT2}$ of a first and second inductive circuit 5a and 5b of the voltage regulator. These capacitors Ccs define for the sense circuit 8 a filtering circuit feature.

Conveniently, the voltage regulator, according to the present embodiment, comprises an amplifier 10, which is in this specific case an operational amplifier located in a voltage current configuration V/I.

Advantageously, the operational amplifier 10 in a converter configuration V/I is connected to a first non inverting terminal 11 at the adder note 30 and to a second inverting terminal 12 or virtual ground at a second adder circuit 35.

The second adder circuit 35 allows the voltages $V_{OUT1}$, $V_{OUT2}$, outputted by the first and second inductive circuit 5a and 5b of each of the two regulator phases to be added, bringing the added voltage to the second terminal 12 by interposing a resistance $R_G$.

The operational amplifier 10 thus outputs a current signal $I_{CS}$ being directly proportional to the sum of the two current phases $I_{PHASE1}$, $I_{PHASE2}$ and thus to the total current $I_{OUT}$ outputted by the voltage regulator according to the relation:

$$I_{INFO} = \frac{R_L}{R_G} \cdot \left( I_{PHASE1} + I_{PHASE2} \right)$$

Moreover, advantageously by using only two pins CS+ e CS-respectively connected to the first input 11 and to the second input 12 of the operational amplifier 10 it is possible to read the voltage regulator current $I_{OUT}$.

The voltage regulator operation for the described configuration will now be analysed. The filtering occurring in correspondence with the sense circuit 8 is first examined, with reference to figure 11.

Obviously, each of the two regulator phases has a coil network or inductive circuit 5a e 5b comprising an inductance L in series with a parasitic resistance $R_L$. The presence of the tracks on the board generates a resistance, indicated with $R_{P1}$ and $R_{P2}$ respectively, located in series with the resistance $R_L$.

From the signal point of view, it can be considered that the voltage regulator output terminal $V_{OUT}$ is set at a ground voltage.

The voltages $V_{INFO1}$ and $V_{INFO2}$ created at the output of the inductance L of each of the two phases, required for the current reading, are easily calculated according to the relations:

$$V_{INFO1}(s) = V_{PHASE1}(s) \cdot \frac{1}{1 + s \cdot \frac{L}{R_L}} + V_{OUT1} \cdot \frac{s \cdot \frac{L}{R_L}}{1 + s \cdot \frac{L}{R_L}}$$

$$V_{INFO2}(s) = V_{PHASE2}(s) \cdot \frac{1}{1 + s \cdot \frac{L}{R_L}} + V_{OUT2} \cdot \frac{s \cdot \frac{L}{R_L}}{1 + s \cdot \frac{L}{R_L}}$$

$$V_{INFO}(s) = \frac{V_{PHASE1}(s) + V_{PHASE2}(s)}{2} \cdot \frac{1}{1 + s \cdot R_S \cdot C_{CS}} + \frac{V_{OUT1}(s) + V_{OUT2}(s)}{2} \cdot \frac{s \cdot R_S \cdot C_{CS}}{1 + s \cdot R_S \cdot C_{CS}}$$

Therefore, on average it will result:

$$V_{INFO} = \frac{R_L \cdot \left( I_{PHASE1} + I_{PHASE2} \right)}{2} + \frac{\left( V_{OUT1} + V_{OUT2} \right)}{2}$$

which is the voltage at the node 30, i.e. at the non inverting terminal 11 of the operational amplifier 10.

As it can be noted, the value of this voltage $V_{INFO}$ is completely Fully differential i.e. independent from the value of the parasitic resistances $R_{P1}$ and $R_{P2}$ due to the board copper tracks.

The presence of the operational amplifier 10 in a voltage-current converter configuration V/I and the presence of the resistances $R_G$ interposed between the inverting terminal of the amplifier 10, with virtual ground, and the respective output voltages $V_{OUT1}$ and $V_{OUT2}$ of the inductive circuits 5a and 5b, generates an output current signal Ics corresponding to:

$$I_{INFO} = \frac{R_L}{R_G} \cdot \left( I_{PHASE1} + I_{PHASE2} \right)$$

This current reading is thus Fully differential and the provided solution allows it to be sensed by using only two pins.

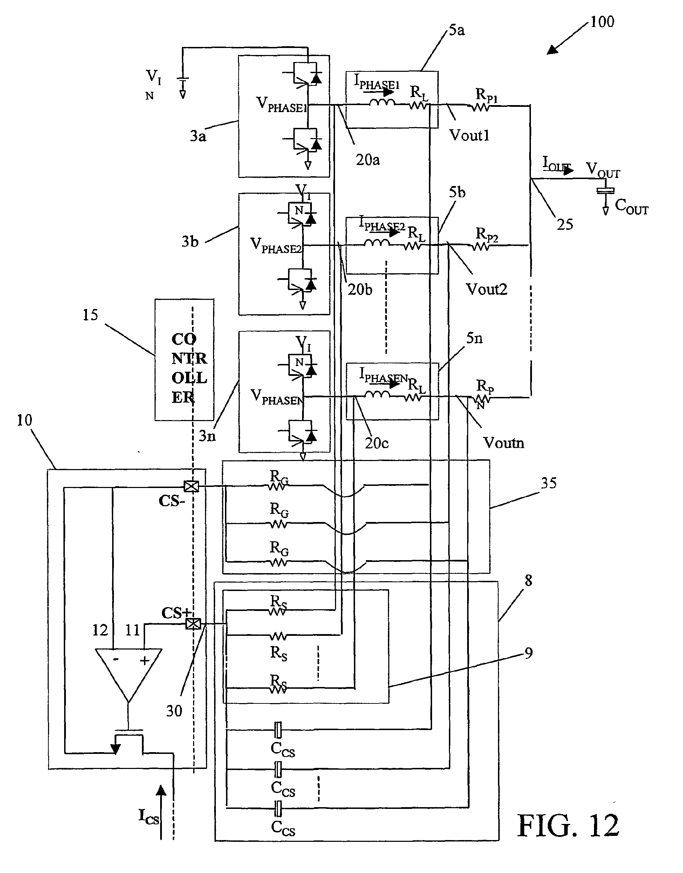

Obviously, the described solution can be applied to a N-phase regulator, such as for example the one shown in figure 12.

The shown multiphase voltage regulator 100 is of the type being suitable to provide a regulated output voltage $V_{OUT}$ on an output terminal 25 and of the type comprising a plurality of N switches 3a 3b,..3n located in parallel to each other, each intended to provide respective current phases $I_{PHASE1}$, $I_{PHASE2}$,...$I_{PHASEN}$ added to each other to generate a total current for a general load $C_{OUT}$ connected to the output terminal 25.

The regulator 100 has also a corresponding plurality of N inductive circuits 5a 5b,..5n, each interposed between an output node 20a, 20b,..20n of each of the N switches 3a 3b,...3n and said output terminal 25.

Moreover, the regulator 100 has a sense circuit 8 comprising an adder circuit 9 to add the voltages of each of the output nodes 20a 20b,..20n of the N switches 3a 3b,...3n and to bring the added voltage at an adder node 30 outputted by the sense circuit 8.

The adder circuit 9 comprises, for each of the switches 3a 3b,..3n, a resistance Rs interposed between each output node 20a , 20b,..20n and the adder node 30.

Moreover, the sense circuit 8 comprises for each of the N inductive circuits 5a, 5b, ..5n a capacitor Ccs interposed between the output of said N inductive circuits 5a,5b,..5n and the adder node 30, which define for the sense circuit 8 a filtering feature.

Furthermore, the regulator 100 comprises an amplifier circuit 10 with a first non inverting terminal 11 connected to the adder node 30 and with a second inverting terminal 12 connected to the output terminal 25, to output a current Ics being proportional to the total current $I_{OUT}$.

Advantageously according to the present embodiment, the second terminal 12 of the amplifier 10 is connected to a second adder circuit 35 to add the voltages $V_{OUT1}$, $V_{OUT2}$,.... $V_{OUTN}$ outputted by the plurality of N inductive circuits 5a, 5b,..5n and bring the added voltage to the second terminal 12.

Conveniently, the first 11 and the second terminal 12 of the amplifier 10 define for the regulator 100 two possible PINs, CS+ e CS-respectively, for a controller 15 suitable to identify the output voltage of the regulator 100.

The present embodiment takes into consideration possible parasitic resistances being on the regulator 100, because of the board copper tracks, identified with a plurality of resistances $R_{P1}$, $R_{P2}$,..$R_{PN}$ located in series with the resistance $R_L$ of the N inductive circuits 5a,5b,..5n and the output node 25 of the regulator 100.

By generalising now the above-mentioned relations for a similar dual-phase regulator it results:

$$\frac{L}{R_L} = R_S \cdot C_{CS} \qquad \textit{time cons}\tan t \textit{ matching relation}$$

$$I_{INFO} = \frac{R_L}{R_G} \cdot \sum_{i=1}^{N} I_{PHASE,i} \qquad \inf \textit{ormation signal}$$

where i is the number of phases.

From the relation for determining $I_{INFO}$ it is possible to observe how the programmability of the signal $I_{INFO}$ is entrusted to the sizing of the resistance $R_G$, useful in the droop function programmability case.

The main advantage of the present invention is thus to obtain a current signal being directly proportional to the sum of the phase currents and thus to the total current outputted by the voltage regulator and completely Fully differential, independent from the board parasitic resistances, requiring a minimum amount of external elements, such as an operational amplifier 10, 2N resistances and N external capacitors $C_{CS}$, while to sense the provided current value only two PINs CS+ e CS-are required.

Obviously, the current signal which can be read by the sensing of the two pins CS+ e CS- can be used to generate the droop function or in any other request needing an information about the total current outputted by the completely Fully differential regulator.

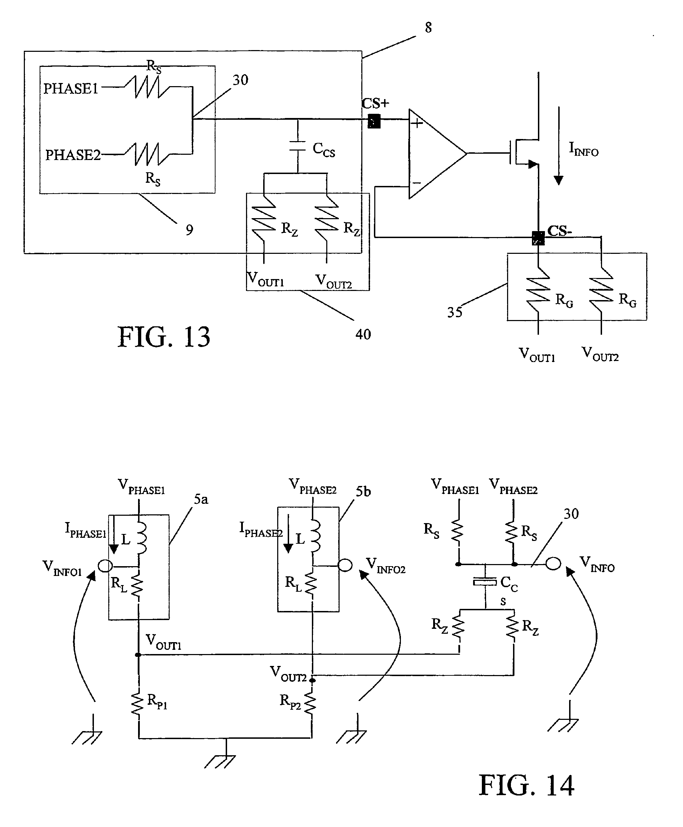

A further solution being provided by the present invention suitable to sense the total current value provided by the regulator by using only two pins and completely Fully differential by using however only one output capacitor, is shown in figure 13.

$$V_{INFO1}(s) = V_{PHASE1}(s) \cdot \frac{1}{1 + s \cdot \frac{L}{R_L}} + V_{OUT1} \cdot \frac{s \cdot \frac{L}{R_L}}{1 + s \cdot \frac{L}{R_L}}$$

$$V_{INFO2}(s) = V_{PHASE2}(s) \cdot \frac{1}{1 + s \cdot \frac{L}{R_L}} + V_{OUT2} \cdot \frac{s \cdot \frac{L}{R_L}}{1 + s \cdot \frac{L}{R_L}}$$

$$V_{INFO}(s) = \frac{V_{PHASE1}(s) + V_{PHASE2}(s)}{2} \cdot \frac{1 + s \cdot \frac{R_Z}{2} \cdot C_{CS}}{1 + s \cdot \left(\frac{R_S + R_Z}{2}\right) \cdot C_{CS}} + \frac{V_{OUT1}(s) + V_{OUT2}(s)}{2} \cdot \frac{s \cdot \frac{R_S}{2} \cdot C_{CS}}{1 + s \cdot \left(\frac{R_S + R_Z}{2}\right) \cdot C_{CS}}$$

The solution is substantially similar to the above-described solution with a variation on the filtering feature of the sense circuit 8, in fact it has a single capacitor Ccs.

Advantageously, the sense circuit 8 has a single capacitor connected to the node 30 at the output of the adder 9, while the other end of the capacitor $C_{CS}$ is connected to an adder circuit 40 to add the voltages $V_{OUT1}$ and $V_{OUT2}$ outputted by the first and second inductive circuit 5a, 5b, of each phase, by interposing a resistance $R_Z$.

By analysing the voltage regulator operation according to the present embodiment, shown in figure 14.

$$V_{INFO1}(s) = V_{PHASE1}(s) \cdot \frac{1}{1 + s \cdot \frac{L}{R_L}} + V_{OUT1} \cdot \frac{s \cdot \frac{L}{R_L}}{1 + s \cdot \frac{L}{R_L}}$$

$$V_{INFO2}(s) = V_{PHASE2}(s) \cdot \frac{1}{1 + s \cdot \frac{L}{R_L}} + V_{OUT2} \cdot \frac{s \cdot \frac{L}{R_L}}{1 + s \cdot \frac{L}{R_L}}$$

$$V_{INFO}(s) = \frac{V_{PHASE1}(s) + V_{PHASE2}(s)}{2} \cdot \frac{1 + s \cdot \frac{R_Z}{2} \cdot C_{CS}}{1 + s \cdot \left(\frac{R_S + R_Z}{2}\right) \cdot C_{CS}} + \frac{V_{OUT1}(s) + V_{OUT2}(s)}{2} \cdot \frac{s \cdot \frac{R_S}{2} \cdot C_{CS}}{1 + s \cdot \left(\frac{R_S + R_Z}{2}\right) \cdot C_{CS}}$$

assuming that

$$\frac{L}{R_L} = \frac{R_S}{2} \cdot C_{CS}$$

$$R_S \gg R_Z$$

it results

$$V_{INFO}(s) = \frac{V_{PHASE1}(s) + V_{PHASE2}(s)}{2} \cdot \frac{1 + s \cdot \frac{R_Z}{2} \cdot C_{CS}}{1 + s \cdot \frac{L}{R_L}} + \frac{V_{OUT1}(s) + V_{OUT2}(s)}{2} \cdot \frac{s \cdot \frac{L}{R_L}}{1 + s \cdot \frac{L}{R_L}}$$

From the relation it can be observed how by selecting such values of the resistance $R_Z$ and of the capacitor Ccs that the zero generated therefrom occurs at much higher frequencies than the current ripple current, i.e. at least a decade later, a correct current measure is obtained.

Therefore, at the current ripple frequency, corresponding to 2fsw in the dual-phase regulator case, and N*fsw for a general N-phase regulator, the voltage value $V_{INFO}$ corresponds to:

$$V_{INFO}(s) \cong \frac{V_{INFO1} + V_{INFO2}}{2}$$

and thus the voltage value at the positive input of the operational amplifier 10 corresponds to:

$$V_{INFO} \cong \frac{R_L \cdot (I_{PHASE1} + I_{PHASE2})}{2} + \frac{(V_{OUT1} + V_{OUT2})}{2}$$

while the current value $I_{INFO}$ outputted by the operational amplifier corresponds to

$$I_{INFO} = \frac{R_L}{R_G} \cdot (I_{PHASE1} + I_{PHASE2})$$

A considerable advantage of the embodiment being provided is to sense the current outputted by a regulator simply by means of two pins, an operational amplifier 10, as well as six resistances and only one external capacitor, however obtaining in the meantime a current signal being directly proportional to the sum of the phase currents by means of a fully differential current reading, independent from the parasitic resistances created for the tracks which can be in the board.

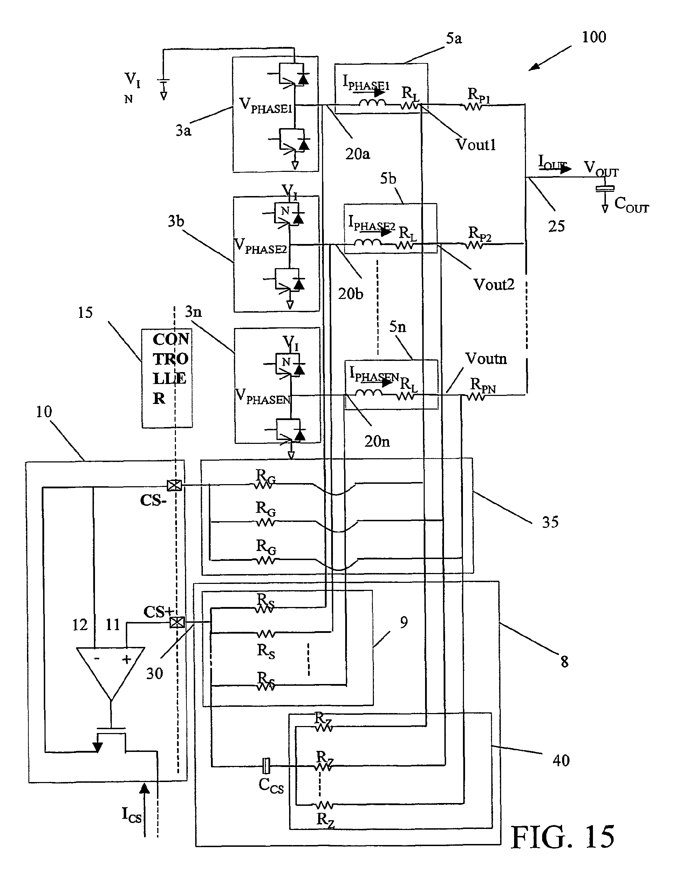

Obviously the present solution can be applied to a N-phase voltage regulator as particularly shown in figure 15.

The shown multiphase voltage regulator 100 is of the type being suitable to provide an output voltage $V_{OUT}$ on an output terminal 25 and of the type comprising a plurality of N switches 3a 3b,..3n located in parallel to each other, each intended to provide respective current phases $I_{PHASE1}$, $I_{PHASE2}$,...$I_{PHASEN}$ added to each other to generate a total current $I_{OUT}$ for a general load $C_{OUT}$ connected to the output terminal 25.

The regulator 100 has also a corresponding plurality of N inductive circuits 5a 5b,..5n, each interposed between an output node 20a, 20b,..20n of each of the N switches 3a 3b,...3n and said output terminal 25.

Moreover, the regulator 100 has a sense circuit 8 comprising an adder circuit 9 to add the voltages of each of the output nodes 20a 20b,..20n of the N switches 3a 3b,...3n and to bring the added voltage at an adder node 30 outputted by the sense circuit 8.

The adder circuit 9 comprises, for each of the switches 3a 3b,..3n, a resistance $R_S$ interposed between each output node 20a , 20b,..20n and the adder node 30.

Moreover, the sense circuit 8 comprises an adder circuit 40 to add the voltages outputted by said N inductive circuits 5a,5b,..5n, by means of a resistance Rz, and to bring the added voltage at the input of a capacitor Ccs which has the output connected to the adder 30. The capacitor Ccs defines for the sense circuit 8 a filtering feature.

Furthermore, the regulator 100 comprises an amplifier circuit 10 with a first non inverting terminal 11 connected to the adder node 30 and with a second inverting terminal 12 connected to the output terminal 25, to output a current $I_{CS}$ being proportional to the total current $I_{OUT}$.

Advantageously according to the present embodiment, the second terminal 12 of the amplifier 10 is connected to a second adder circuit 35 to add the voltages $V_{OUT1}$, $V_{OUT2}$,...$V_{OUTN}$ outputted by the plurality of N inductive circuits 5a, 5b,..5n and bring the added voltage to the second terminal 12.

Conveniently, the first 11 and the second terminal 12 of the amplifier 10 define for the regulator 100 two possible PINs, CS+ e CS-respectively, for a controller 15 suitable to identify the output voltage of the regulator 100.

The present embodiment takes into consideration possible parasitic resistances being on the regulator 100, because of the board copper tracks, identified with a plurality of resistances $R_{P1}$, $R_{P2}$,..$R_{PN}$ located in series with the resistance $R_L$ of the N inductive circuits 5a,5b,..5n and the output node 25 of the regulator 100.

Considering the above-mentioned relations for the dual-phase case generalised for the N-phase converter it results:

$$\frac{L}{R_L} = \frac{R_S \cdot C_{CS}}{N} \qquad time\ cons\tan t\ matching\ relation$$

$$I_{INFO} = \frac{R_L}{R_G} \cdot \sum_{i=1}^{N} I_{PHASE,i} \qquad \inf ormation\ signal$$

$$\frac{R_Z}{N} \cdot C_{CS} < \frac{1}{2 \cdot \pi \cdot 10 \cdot N \cdot f_{SW}} \quad \rightarrow \quad R_Z \cdot C_{CS} < \frac{1}{20 \cdot \pi \cdot f_{SW}}$$

As it can be noted, the relation which must necessarily be satisfied on the sizing of the resistance Rz is independent from the number N of regulator phases, since the current ripple frequency is equal to N·$f_{SW}$ while the zero-equivalent resistance is equal to Rz/N.

A main advantage of the voltage regulator realised according to the present invention is to directly read a current value being proportional to the total current value provided by the voltage regulator.

A further considerable advantage of the present voltage regulator is to read said value being proportional to the total current value simply by means of two pins, independently from the number of the existing current phases.

A further advantage of the voltage regulator realised according to the present invention is to provide a reliable, simple and economical circuit structure requiring a minimum of external components, i.e. (N+1) external resistances, a capacitor and a single amplifier. In particular, the single capacitor being required can be of the very reliable type.

Another advantage of the present voltage regulator is to provide a compact structure thus requiring a minimum surface for the integration thereof in a silicon chip and for the assembly thereof in a board.

An advantage of the voltage regulator realised according to the present invention is due to the reading precision with respect to the temperature, in fact the reading of the single current phase is performed on the parasitic resistance $R_L$ of the inductance L.

A further considerable advantage is due to the fact that sensed current measures are Fully differential, i.e. not influenced by the value of the parasitic resistances being on the application boards due to the board copper tracks.

Last but not least, the advantage linked to the fact of programming the droop function by regulating the value of the single resistance $R_G$ or of N resistances $R_G$, all with the same value, in a particularly compact solution obtained by using a filtering determined by the presence of N resistances Rs and N capacitors Ccs or a single capacitor Ccs and N resistances Rz, which define in that case an extremely economical solution.

**Claims**

1. A multiphase voltage regulator to provide a regulated output voltage ($V_{OUT}$) on an output terminal (25) and of the type comprising a plurality of (N) switches (3a 3b,..3n) located in parallel to each other, each intended to provide respective current phases ($I_{PHASE1}$, $I_{PHASE2}$,...$I_{PHASEN}$) added to each other to generate a total current ($I_{OUT}$) for a general load ($C_{OUT}$) connected to said output terminal (25), it further comprising a corresponding plurality of (N) inductive circuits (5a 5b,..5n), each interposed between an output node (20a, 20b,...20n) of each of said (N) switches (3a 3b,...3n) and said output terminal (25), **characterised in that** it has a sense filtering circuit (8) suitable to filter the voltages being in each of said output nodes (20a, 20b,..20n) of said (N) switches (3a, 3b,...3n) and bring the added and filtered voltage on an adder node (30) being connected to a first terminal (11) of an amplifier circuit (10), said sense filtering circuit (8) comprising at least a capacitor (Ccs) being interposed between said output terminal (25) and said adder node (30), said amplifier circuit (10) having on a second terminal (12) a voltage being equal or proportional to the voltage ($V_{OUT}$) in said output terminal (25) to output a current (Ics) being proportional to said total current ($I_{OUT}$).

2. A multiphase voltage regulator according to claim 1, **characterised in that** said sense filtering circuit (8) comprises an adder circuit (9) interposed between said adder node (30) and each of said output nodes (20a, 20b, ..20n) of said (N) switches (3a, 3b,... 3n), said adder circuit (9) comprising for each of said (N) switches (3a 3b,..3n) a resistance (Rs) interposed between each of said output nodes (20a, 20b,..20n) and said adder node (30).

3. A multiphase voltage regulator according to claim 1, **characterised in that** each of said inductive circuits (5a, 5b,.., 5n) comprises an inductance (L) and a resistance ($R_L$) and **in that** the value of said resistances (Rs) and of said at least one capacitor (Ccs) are so calculated as to equal to the following relation:

$$\frac{L}{R_L} = \frac{R_S}{N} \cdot C_{CS} \qquad time\ cons\tan t\ matching\ relation$$

4. A multiphase voltage regulator according to claim 1, **characterised in that** said amplifier circuit (10) is an operational amplifier in a voltage-current converter configuration (V/I) connected with said first non inverting terminal (11) to said adder node (30) and with said second inverting terminal (12) to a resistance ($R_G$) having at the other end said output voltage ($V_{OUT}$).

5. A multiphase voltage regulator according to claim 4, **characterised in that** said amplifier circuit (10) generates an output current signal (Ics) being directly proportional to said current phases($I_{PHASE1}$, $I_{PHASE2}$,....$I_{PHASEN}$) of said switches (3a 3b,..3n) and thus to said total current ($I_{OUT}$) according to the following relation

$$I_{INFO} = \frac{R_L}{R_G} \cdot \frac{1}{N} \cdot \sum_{i=1}^{N} I_{PHASE,i} \qquad \inf ormation\ signal$$

6. A multiphase voltage regulator according to claim 1, **characterised in that** said sense filtering circuit (8) comprises a further adder circuit (40) connected in series to said at least one capacitor (Ccs), said further adder circuit (40) being suitable to add the voltages outputted by said (N) inductive circuits (5a,5b,..5n) by means of a resistance ($R_z$) and to bring the added voltage to the terminal of said at least one capacitor (Ccs) having the output connected to said adder node (30).

**7.** A multiphase voltage regulator according to claim 1, **characterised in that** said amplifier circuit (10) is an operational amplifier in a voltage-current converter configuration (V/I) connected with said first non inverting terminal (11) to said adder node (30) and with a second inverting terminal (12) connected to the output of a second adder circuit (35) suitable to add the voltages ($V_{OUT1}$, $V_{OUT2}$,...$V_{OUTN}$) outputted by the plurality of said (N) inductive circuits (5a, 5b,..5n) by means of a resistance ($R_G$).

**8.** A multiphase voltage regulator according to claim 6, **characterised in that** said resistance ($R_Z$) satisfies the relation

$$\frac{R_z}{N} \cdot C_{CS} < \frac{1}{2 \cdot \pi \cdot 10 \cdot N \cdot f_{SW}} \quad \rightarrow \quad R_z \cdot C_{CS} < \frac{1}{20 \cdot \pi \cdot f_{SW}}$$

where fsw is the current ripple frequency.

**9.** A multiphase voltage regulator according to one or more of previous claims 1-8, **characterised in that** said sense filtering circuit (8) comprises for each of said (N) inductive circuits (5a, 5b,..5n) said at least one capacitor (Ccs) interposed between the output of said (N) inductive circuits (5a, 5b,..5n) and said adder node (30).

**10.** A multiphase voltage regulator according to one or more of previous claims 1-9, **characterised in that** it comprises a controller (15) with two pins (CS+; CS-) to read said total current ($I_{OUT}$), said two pins (CS+; CS-) being respectively connected to said first input (11) and to said second input (12) of said amplifier (10).

**Patentansprüche**

**1.** Mehrphasen-Spannungsregler zum Liefern einer geregelten Ausgangsspannung ($V_{OUT}$) an einem Ausgangsanschluss (25) und des eine Mehrzahl von (N) Schaltern (3a, 3b, ..., 3n) umfassenden Typs, die parallel zueinander geschaltet sind, von denen jeder dafür vorgesehen ist, entsprechende Stromphasen ($I_{PHASE1}$, $I_{PHASE2}$, .., $I_{PHASEN}$) zu liefern, die aufeinander aufaddiert werden, um einen Gesamtstrom ($I_{OUT}$) für eine allgemeine Last ($C_{OUT}$) zu generieren, die mit dem Ausgangsanschluss (25) verbunden ist,
ferner aufweisend eine entsprechende Mehrzahl von (N) induktiven Schaltungen (5a, 5b, ..., 5n), von denen jede zwischen einem Ausgangsknoten (20a, 20b, ..., 20n) von jedem der (N) Schalter (3a, 3b, ..., 3n) und dem Ausgangsanschluss (25) geschaltet ist,
**dadurch gekennzeichnet,**
**dass** er eine Aufnehmerfilterschaltung (8) aufweist, die geeignet ist, die Spannung zu filtern, die an jedem der Ausgangsknoten (20a, 20b, ..., 20n) der (N) Schalter (3a, 3b, ..., 3n) anliegt, und die geeignet ist, die addierten und gefilterten Spannungen auf einen Addiererknoten (30) zu bringen, der mit einem ersten Anschluss (11) einer Verstärkerschaltung (10) verbunden ist,
wobei die Aufnehmerfilterschaltung (8) mindestens einen Kondensator ($C_{CS}$) aufweist, der zwischen dem Ausgangsanschluss (25) und dem Addiererknoten (30) geschaltet ist,
wobei die Verstärkerschaltung (10) an einem zweiten Anschluss (12) eine der Spannung ($V_{OUT}$) an dem Ausgangsanschluss (25) gleiche oder proportionale Spannung aufweist, um einen dem Gesamtstrom ($I_{OUT}$) proportionalen Strom ($I_{CS}$) auszugeben.

**2.** Mehrphasen-Spannungsregler nach Anspruch 1, **dadurch gekennzeichnet, dass** die Aufnehmerfilterschaltung (8) eine Addiererschaltung (9) aufweist, die zwischen dem Addiererknoten (30) und jedem der Ausgangsknoten (20a, 20b, ..., 20n) der (N) Schalter (3a, 3b, ..., 3n) geschaltet ist, wobei die Addiererschaltung (9) für jeden der (N) Schalter (3a, 3b, ..., 3n) einen zwischen jeden der Ausgangsknoten (20a, 20b, ..., 20n) und dem Addiererknoten (30) geschalteten Widerstand aufweist.

**3.** Mehrphasen-Spannungsregler nach Anspruch 1, **dadurch gekennzeichnet, dass** jede der induktiven Schaltungen (5a, 5b, ..., 5n) eine Induktanz (L) und einen Widerstand ($R_L$) aufweist, und dadurch, dass der Wert des Widerstandes ($R_s$) und der des mindestens einen Kondensators ($C_{CS}$) derart berechnet sind, so dass sie der folgenden Relation entsprechen;

$$\frac{L}{R_L} = \frac{R_S}{N} \cdot C_{CS} \qquad \text{Zeitkonstanten-Entsprechungsrelation}$$

**4.** Mehrphasen-Spannungsregler nach Anspruch 1, **dadurch gekennzeichnet, dass** die Verstärkerschaltung (10) ein Operationsverstärker in einer Spannungs-/Strom-Konverterkonfiguration (V/I) ist, der an dem nichtinvertierenden ersten Anschluss (11) mit dem Addiererknoten (30) und an dem invertierenden zweiten Eingang (12) mit einem Widerstand ($R_G$) verbunden ist, welcher an seinem anderen Ende die Ausgangsspannung ($V_{OUT}$) aufweist.

**5.** Mehrphasen-Spannungsregler nach Anspruch 4, **dadurch gekennzeichnet, dass** die Verstärkerschaltung (10) ein Ausgangsstromsignal ($I_{CS}$) generiert, das direkt proportional zu den Stromphasen ($I_{PHASE1}$, $I_{PHASE2}$, ..., $I_{PHASEN}$) der Schalter (3a, 36, ..., 3n) und somit proportional zu dem Gesamtstrom ($I_{OUT}$) gemäß der folgenden Relation ist:

$$I_{INFO} = \frac{R_L}{R_G} \cdot \frac{1}{N} \cdot \sum_{i=1}^{N} I_{PHASE,i} \qquad \text{Informationssignal}$$

**6.** Mehrphasen-Spannungsregler nach Anspruch 1, **dadurch gekennzeichnet, dass** die Aufnehmerfilterschaltung eine weitere Addiererschaltung (40) aufweist, die mit dem mindestens einen Kondensator ($C_{CS}$) in Reihe geschaltet ist, wobei die weitere Addiererschaltung (40) geeignet ist, um die von (N) induktiven Schaltungen (5a, 5b,..., 5n) ausgegebenen Spannungen mittels eines Widerstandes ($R_Z$) aufzuaddieren, und um die addierte Spannung an den Anschluss des mindestens einen Kondensators ($C_{CS}$) zu bringen, dessen Ausgang mit dem Addierknoten (30) verbunden ist.

**7.** Mehrphasen-Spannungsregler nach Anspruch 1, **dadurch gekennzeichnet, dass** die Verstärkerschaltung (10) ein Operationsverstärker in einer Spannungs-/Strom-Konverterkonfiguration (V/I) ist, der an dem nichtinvertierenden ersten Anschluss (11) mit dem Addiererknoten (30) und an einem invertierenden zweiten Anschluss (12) mit dem Ausgang einer zweiten Addiererschaltung (35) verbunden ist, die geeignet ist, die Spannungen ($V_{OUT1}$, $V_{OUT2}$, ..., $V_{OUTN}$) zu addieren, die durch die Mehrzahl der (N) induktiven Schaltungen (5a, 5b, ..., 5n) mittels eines Widerstandes ($R_G$) ausgegeben werden.

**8.** Mehrphasen-Spannungsregler nach Anspruch 6, **dadurch gekennzeichnet, dass** der Widerstand ($R_Z$) der folgenden Relation genügt:

$$\frac{R_Z}{N} \cdot C_{CS} < \frac{1}{2 \cdot \pi \cdot 10 \cdot N \cdot f_{SW}} \quad \rightarrow \quad R_Z \cdot C_{CS} < \frac{1}{20 \cdot \pi \cdot f_{SW}} \qquad \text{wobei } f_{sw} \text{ die Stromrippel-Frequenz ist.}$$

**9.** Mehrphasen-Spannungsregler nach einem oder mehreren der vorstehenden Ansprüche 1 bis 8, **dadurch gekennzeichnet, dass** die Aufnehmerfilterschaltung (8) den mindestens einen Kondensator ($C_{CS}$), der zwischen den Ausgang der induktiven Schaltungen (5a, 5b,..., 5n) und dem Addiererknoten (30) eingesetzt ist, für jede der (N) induktiven Schaltungen (5a, 5b,..., 5n) aufweist.

**10.** Mehrphasen-Spannungsregler nach einem oder mehreren der vorstehenden Ansprüche 1 bis 9, **dadurch gekennzeichnet, dass** er eine Steuerung (15) mit zwei Anschlüssen (CS+; CS-) zum Lesen des Gesamtstromes ($I_{OUT}$) aufweist, wobei die beiden Anschlüsse (CS+; CS-) mit dem ersten Eingang (11) beziehungsweise mit dem zweiten Eingang (12) des Verstärkers (10) verbunden sind.

## Revendications

**1.** Régulateur de tension multiphasé destiné à fournir une tension de sortie régulée ($V_{OUT}$) sur une borne de sortie (25) et du type comprenant une pluralité de (N) commutateurs (3a, 3b, ... 3n) parallèles entre eux, chacun ayant pour fonction de fournir des phases de courant respectives ($I_{PHASE1}$, $I_{PHASE2}$, ...$I_{PHASEN}$) s'ajoutant les unes aux autres pour produire un courant total ($I_{OUT}$) pour une charge globale ($C_{OUT}$) connectée à ladite borne de sortie (25), ledit régulateur comprenant en outre une pluralité correspondante de (N) circuits inductifs (5a, 5b, ...5n) interposés chacun entre un noeud de sortie (20a, 20b, ...20n) de chacun desdits (N) commutateurs (3a, 3b, ...3n) et ladite borne de sortie (25), **caractérisé en ce qu'**il comporte un circuit de filtrage à détection (8) apte à filtrer les tensions présentes sur chacun desdits noeuds de sortie (20a, 20b, ...20n) desdits (N) commutateurs (3a, 3b, ...3n) et à amener la tension additionnée et filtrée sur un noeud d'addition (30) qui est connecté à une première borne (11) d'un circuit d'amplification (10), ledit circuit de filtrage à détection (8) comprenant au moins un condensateur ($C_{CS}$) qui est interposé entre ladite borne de sortie (25) et ledit noeud d'addition (30), ledit circuit d'amplification (10) ayant, sur une seconde borne (12), une tension égale ou proportionnelle à la tension ($V_{OUT}$) de ladite borne de sortie (25) pour produire un courant ($I_{CS}$) proportionnel audit courant total ($I_{OUT}$).

2. Régulateur de tension multiphasé selon la revendication 1, **caractérisé en ce que** ledit circuit de filtrage à détection (8) comprend un circuit d'addition (9) interposé entre ledit noeud d'addition (30) et chacun desdits noeuds de sortie (20a, 20b, ...20n) desdits (N) commutateurs (3a, 3b, ...3n), ledit circuit d'addition (9) comprenant, pour chacun desdits (N) commutateurs (3a, 3b, ..3n), une résistance ($R_S$) interposée entre chacun desdits noeuds de sortie (20a, 20b, ...20n) et ledit noeud d'addition (30).

3. Régulateur de tension multiphasé selon la revendication 1, **caractérisé en ce que** chacun desdits circuits inductifs (5a, 5b, ....5n) comprend une inductance (L) et une résistance ($R_L$) et **en ce que** la valeur desdites résistances ($R_S$) et dudit au moins un condensateur ($C_{CS}$) est calculée de manière à correspondre à la relation suivante :

$$\frac{L}{R_L} = \frac{R_S}{N} \cdot C_{CS} \qquad \text{\textit{relation de correspondance avec une constante de temps}}$$

4. Régulateur de tension multiphasé selon la revendication 1, **caractérisé en ce que** ledit circuit d'amplification (10) est un amplificateur opérationnel dans une configuration de convertisseur tension-courant (V/I) connecté avec ladite première borne non inverseuse (11) audit noeud d'addition (30) et avec ladite seconde borne inverseuse (12) à une résistance ($R_G$) ayant à l'autre extrémité ladite tension de sortie ($V_{OUT}$).

5. Régulateur de tension multiphasé selon la revendication 4, **caractérisé en ce que** ledit circuit d'amplification (10) génère un signal de courant de sortie ($I_{CS}$) directement proportionnel audites phases de courant ($I_{PHASE1}$, $I_{PHASE2}$, ... $I_{PHASEN}$) desdits commutateurs (3a, 3b, ...3n) et donc audit courant total ($I_{OUT}$) selon la relation suivante

$$I_{INFO} = \frac{R_L}{R_G} \cdot \frac{1}{N} \cdot \sum_{i=1}^{N} I_{PHASE,i} \quad \text{\textit{signal d'information}}$$

6. Régulateur de tension multiphasé selon la revendication 1, **caractérisé en ce que** ledit circuit de filtrage à détection (8) comprend un autre circuit d'addition (40) connecté en série audit au moins un condensateur ($C_{CS}$), ledit autre circuit d'addition (40) étant apte à additionner les tensions produites par lesdits (N) circuits inductifs (5a, 5b, ...5n) au moyen d'une résistance ($R_z$) et à amener la tension additionnée à la borne dudit au moins un condensateur ($C_{CS}$) dont la sortie est connectée audit noeud d'addition (30).

7. Régulateur de tension multiphasé selon la revendication 1, **caractérisé en ce que** ledit circuit d'amplification (10) est un amplificateur opérationnel dans une configuration de convertisseur tension-courant (V/I) connecté avec ladite première borne non inverseuse (11) audit noeud d'addition (30) et avec une seconde borne inverseuse (12) connectée à la sortie d'un second circuit d'addition (35) apte à additionner les tensions ($V_{OUT1}$, $V_{OUT2}$, $V_{OUTN}$) produites par la pluralité de (N) circuits inductifs (5a, 5b, ...5n) au moyen d'une résistance ($R_G$).

8. Régulateur de tension multiphasé selon la revendication 6, **caractérisé en ce que** ladite résistance ($R_z$) satisfait la relation

$$\frac{R_z}{N} \cdot C_{CS} < \frac{1}{2 \cdot \pi \cdot 10 \cdot N \cdot f_{sw}} \rightarrow R_z \cdot C_{CS} < \frac{1}{20 \cdot \pi \cdot f_{sw}}$$

où $f_{sw}$ est la fréquence d'ondulation du courant

**9.** Régulateur de tension multiphasé selon une ou plusieurs des revendications 1 à 8 précédentes, **caractérisé en ce que** ledit circuit de filtrage à détection (8) comprend, pour chacun desdits (N) circuits inductifs (5a, 5b, ...5n), ledit au moins un condensateur ($C_{CS}$) interposé entre la sortie desdits (N) circuits inductifs (5a, 5b, ...5n) et ledit noeud d'addition (30).

**10.** Régulateur de tension multiphasé selon une ou plusieurs des revendications 1 à 9 précédentes, **caractérisé en ce qu'**il comprend un régulateur (15) avec deux broches (CS+ ; CS-) pour lire ledit courant total ($I_{OUT}$), lesdites deux broches (CS+ ; CS-) étant connectées respectivement à ladite première entrée (11) et à ladite seconde entrée (12) dudit amplificateur (10).

**DUAL-PHASE Controller**

Vin

HS

$I_{OUT}/2$

$R_L$

$I_{OUT}$

L

Cout

Vout

D

LS

R $(RC=L/R_L)$

C

Vin

HS

L

$I_{OUT}/2$

D

LS

**FIG. 1**

Phase 1 Current

Phase 2 Current

*Interleaving = phase shift = T/ N*

**FIG. 2**

9

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

**EP 1 875 591 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5982160 A, Walters
- US 6683441 B2, Schiff
- US 6683441 B
- US 20030102849 A